(19) Europäisches Patentamt
European Patent Office
Office européen des brevets

(11) Publication number: 0 336 576
A1

# (12) EUROPEAN PATENT APPLICATION

(21) Application number: 89302511.4

(22) Date of filing: 14.03.89

(30) Priority: 17.03.88 JP 63977/88
09.06.88 JP 142119/88

(43) Date of publication of application:
11.10.89 Bulletin 89/41

(84) Designated Contracting States:
DE FR GB

(51) Int. Cl.4: C08G 61/12

(71) Applicant: Matsushita Electric Industrial Co., Ltd.
1006, Oaza Kadoma
Kadoma-shi Osaka-fu, 571(JP)

(72) Inventor: Hotta, Shu
1-8-46, Nagaokagu-machi
Hirakata-shi Osaka(JP)
Inventor: Soga, Mamoru
1-1-22, Saikudani Tennoji-ku
Osaka-shi Osaka(JP)
Inventor: Sonoda, Nobuo
1-31-15, Torikainaka
Settsu-shi Osaka(JP)

(74) Representative: Myerscough, Philip Boyd et al
J.A.Kemp & Co. 14, South Square Gray's Inn
London, WC1R 5EU(GB)

## (54) A method for the production of 5-membered polyheterocycles.

(57) A method for the production of 5-membered polyheterocycles comprising dehydrogenation condensation of 5-membered heterocyclic compounds in the presence of an oxidizing agent in which at least one of the conditions must be fulfilled:

a. Dehydration of the reaction system,
b. Deoxidation of the reaction system, and
c. Reaction temperature at 15° C or less,

resulting in 5-membered polyheterocycles with a high degree of polymerization.

EP 0 336 576 A1

Xerox Copy Centre

## BACKGROUND OF THE INVENTION

1. Field of the invention:

This invention relates to a method for the production of 5-membered polyheterocycles that can be used in the fields of electronics and optical electronics as electrical materials and electronic materials.

2. Description of the prior art:

There have been a number of trials of the synthesis of 5-membered polyheterocycles. These include, for example, the oxidation method of 5-membered heterocyclic compounds with ferric chloride ($FeCl_3$) and the like, such as the method of R. Sugimoto et al. in Chemical Express, 1, 635 (1986). However, the degree of polymerization of the 5-membered polyheterocycles obtained by the prior art referred to above is small, and satisfactory physical properties cannot be obtained. The reason may be, for example, the isomerization or the loss of activity of the cationic intermediate in the reaction mechanism below, which seems likely for the polymerization reaction disclosed in the reference of Sugimoto et al.

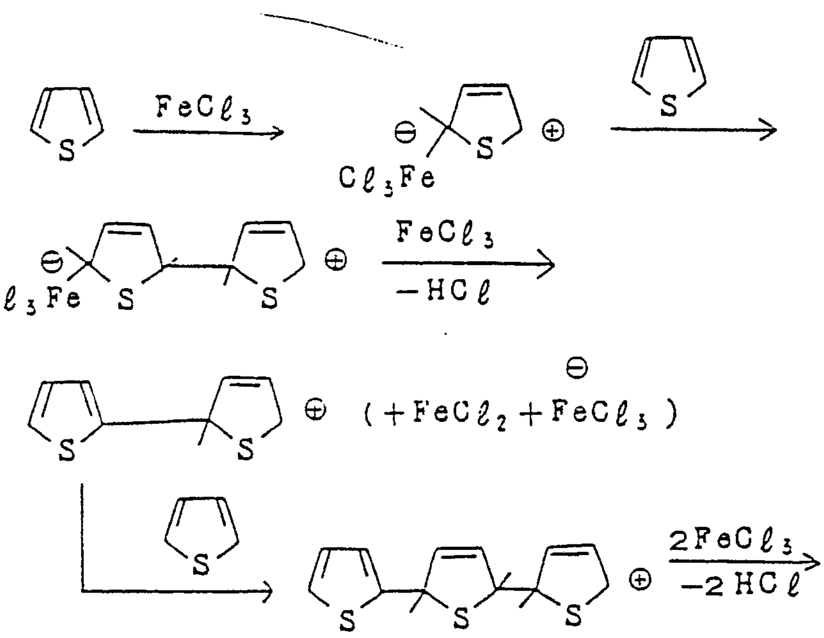


These kinds of undesirable reactions take place in the presence of water or oxygen or at temperatures that are too high. Often even room temperature is high enough to give rise to these reactions.

## SUMMARY OF THE INVENTION

The method for the production of 5-membered polyheterocycles of this invention, which overcomes the above-discussed and numerous other disadvantages and deficiencies of the prior art, comprises dehydrogenation condensation of 5-membered heterocyclic compounds in the presence of an oxidizing agent in which at least one of these conditions must be fulfilled:

a. Dehydration of the reaction system,

b. Deoxidation of the reaction system, and

c. Reaction temperature at 15° C or less.

In a preferred embodiment, the oxidizing agent is a metal halide. Here, by 5-membered heterocyclic compounds, pyrrole, furan, thiophene, selenophene, tellurophene, and these compounds with a substituent such as alkyl, alkoxy, or the like at the 3- or 4-position are meant.

As the oxidizing agent used in the dehydrogenation condensation, Lewis acids such as metallic halides, quinones, etc., are useful. As metallic halides, there are halides prepared from metals such as iron, nickel, cobalt, tungsten, molybdenum, copper, and the like. As quinones, p-benzoquinone, chloranil, and so on can be used effectively. Of these oxidizing agents, metallic halides give particularly good results.

Thus, the invention described herein makes possible the objective of providing a method for the production of 5-membered polyheterocycles with excellent properties and these compounds have a high degree of polymerization.

## BRIEF DESCRIPTION OF THE DRAWINGS

This invention may be better understood and its numerous objects and advantages will become apparent to those skilled in the art by reference to the accompanying drawing as follows:

Figure 1 is the infrared spectrum of poly(3-hexylthiophene).

## DESCRIPTION OF THE PREFERRED EMBODIMENT

The polymerization reaction of this invention takes place by means of cationic polymerization. The polymerization of a vinyl compound and benzene with a Lewis acid such as a metallic halide, $BF_3$, or the like as an initiator is also controlled by such cationic polymerization. The use of a completely purified monomer and/or a catalyst inhibits the initiation of the polymerization reaction, so it is generally necessary to include trace amounts of a co-catalyst such as water, alcohol, or the like (See, for example, Shunsuke Murahashi, ed., Polymer Sciences, Kyoritsu Shuppan Inc., 1966, and P. Kovacic et al., J. Polymer Science, 47, 45 (1960).

However, the 5-membered heterocyclic compounds (monomers) of this invention have carbons at the 2-position and the 5(α)-position, counting from the hetero atom, that are extremely reactive, so unlike for the polymerization of a vinyl compound and benzene, the presence of water, alcohol, or another co-catalyst is not essential. Furthermore, the results of a detailed study done by the inventors have shown that the presence of such gives rise to side reactions that are undesirable, such as the termination of the polymerization reaction mentioned above. In particular, water is present in a concentration that cannot be ignored in an unpurified solvent or the like, resulting in a remarkable decrease in the degree of polymerization. When oxygen is also present at the same time, it gives rise to undesirable results like those of water. Also, in general, in cationic polymerization, side reactions such as the chain transfer reaction, termination reaction, isomerization, and the like occur readily at high temperatures, but are increasingly inhibited as the temperature is lowered so that preferential propagation in the polymerization reaction can take place. (See, for example, Shunsuke Murahashi, ed., Polymer Chemistry, Kyoritsu Shuppan Inc., 1966).

These circumstances were kept in mind, and special consideration was given to satisfying the following conditions when 5-membered polyheterocycles were to be prepared by the method of this invention.

a. Dehydration of the reaction system,

b. Deoxidation of the reaction system, and

c. Reaction temperature of 15° C or less

We found that for the final condition, as a low temperature as possible gave the best results. The value of the lowest temperature depends upon the solvents for reaction that are to be used, and is usually set at the melting point of these solvents or higher. It is most preferable to fulfill all of the conditions given above.

The positions of the peaks of the optical absorption spectrum of the 5-membered polyheterocycles of this invention and the conductivity of the complex of polymer and Lewis acid obtained by contact with a Lewis acid such as iodine are an indication of the degree of polymerization. That is, the greater the degree of polymerization of the 5-membered polyheterocycles, the more the propagation of the π-conjugated

system of the 5-membered polyheterocycles along the chain of the molecule of the said 5-membered polyheterocycles, resulting in a shift of the position of the absorption peaks to regions of longer wavelengths, resulting in an increase in the conductivity of the complex (See, for example, S. Hotta, Synthetic Metals 22, 103 (1987)). For this reason, the 5-membered polyheterocycles obtained by this method can be expected to have special characteristics such as those mentioned above.

## Example 1

By the method disclosed by K. Tamao et al. in J. Am. Chem. Soc., 94, 4374 (1972), 3-hexylthiophene was synthesized, dried overnight in a molecular sieve, and distilled under reduced pressure.

Then, 0.04 mol (6.5 g) of ferric chloride (Merck, synthesis-grade reagent, purity over 98%) was rapidly taken in a dried nitrogen atmosphere and added to a two-mouthed flask with a dropping funnel under a stream of nitrogen gas, and dried by being heated to about 100° C under reduced pressure while being agitated with a stirrer bar for about 15 minutes.

Then, the preparation was dried over calcium hydride overnight, after which 100 ml of chloroform that was distilled in a nitrogen atmosphere was added rapidly to the preparation in the flask under a stream of nitrogen gas. The resulting suspension of ferrous chloride in chloroform was agitated with a stirrer bar in a dried nitrogen atmosphere, while 0.01 mol (1.68 g) of 3-hexylthiophene was added dropwise via the dropping funnel to the suspension in the flask.

Agitation was continued for about 4 hours at room temperature, and the suspension turned deep blue, after which the suspension was added to 1 liter of methanol to form a dark blue powder; this powder was extracted overnight in methanol by use of a Soxlhet's extractor, giving about 1 g of a dark brown color when dried under reduced pressure. Results of infrared spectral analysis are shown in Figure 1, and they indicate that the powder was poly(3-hexylthiophene).

Next, 0.5 g of this powder was taken and added to about 100 ml of 2-methyltetrahydrofuran, and the mixture was heated at 60° C for about 4 hours to dissolve the powder in the solvent; the insoluble residue was removed by filtration, and the solution was added to 1 liter of methanol and filtered again, giving purified poly(3-hexylthiophene).

This compound was added to chloroform of spectral-analysis grade at the proportions of 2 mg/ml, and the resulting solution was cast on a slide glass, giving a sample for use in spectral analysis in the ultraviolet and visible regions. Separately, a solution with the concentration of 50 mg/ml was prepared and cast on a slide glass, after which the sample was dried, resulting in a film about 10 µm thick. The film was placed in acetonitrile solution and doped with iodine, giving a sample for measurement of the conductivity.

## Example 2

Instead of the chloroform used in Example 1, chloroform that was dried with calcium chloride and filtered was used, and instead of drying with nitrogen, drying with air was done; other procedures were exactly the same as in Example 1, and poly(3-hexylthiophene) was prepared.

## Example 3

Ferric chloride (6.5 g) was weighed in the air, and placed in a two-mouthed flask with a dropping funnel. Thereafter, commercially available chloroform was put into the flask containing the ferrous chloride, and the resulting suspension was bubbled with nitrogen for 4 hours; then, 1.68 g of 3-hexylthiophene was added dropwise in an atmosphere of nitrogen gas. The remaining procedures were the same as those in Example 1, giving poly(3-hexylthiophene).

## Comparative Example

Before the reactions carried out in Examples 1-3 and during the reactions as well, drying with the use of gases, deaeration with the use of reduced pressure, and distillation were not done. Poly(3-hexylthiophene) was prepared on the same reaction scale as those of Examples 1-3.

The above reaction conditions are summarized in Table 1.

Table 1

| Preparation conditions for poly(3-hexylthiophene) | | | | |
|---|---|---|---|---|
| | Example 1 | Example 2 | Example 3 | Comparative Example |
| Weighing of ferrous chloride | In dried nitrogen gas | In dried air | In the air | In the air |
| Deaeration with use of reduced pressure | Done | Done | None | None |
| Nitrogen bubbling of reaction system | None | None | Done | None |
| Gas exchange during reaction | Dried nitrogen gas | Dried air | Nitrogen gas | Air |
| Chloroform | Distillation | Calcium chloride | None | None |
| Special features | Dehydration, Deoxidation | Dehydration | Deoxidation | - |

Table 2 summarizes the results of measurements of the optical spectra and the conductivity.

Table 2

| Positions of peaks of absorption spectrum and the conductivity | | |
|---|---|---|
| | Absorption peak (nm) | Conductivity (S/cm) |
| Example 1 | 500 | 50 |
| Example 2 | 480 | 20 |
| Example 3 | 480 | 20 |
| Comparative Example | 460 | 5 |

These results show that in a reaction system in which dehydration and deoxidation were done, poly(3-hexylthiophene) with excellent characteristics was obtained. In particular, the best results are obtained when both dehydration and deoxidation were done.

Example 4

First, 0.08 mol (13 g) of ferric chloride and 200 ml of chloroform that was purified by distillation were put into a two-mouthed flask with a dropping funnel, and the mixture was kept at a fixed temperature (either 15 °C or 0 °C) while being agitated with a stirrer bar. Next, 0.02 mol (3.4 g) of 3-hexylthio phene was added dropwise to the suspension of ferrous chloride in chloroform via the dropping funnel of the flask. Thereafter, agitation was continued overnight at a given temperature, and when the pungent smell of hydrogen chloride gas disappeared, the reaction mixture was put into 2 liters of methanol, giving a dark green powder. This was then extracted by the use of a Soxlhet's extractor overnight in methanol, and dried under reduced pressure, giving about 2 g of a dark red powder. Spectral analysis showed that this powder was poly(3-hexylthiophene).

Next, 0.5 g of this powder was taken, and placed in about 100 ml of 2-methyltetrahydrofuran; the mixture was heated at 60 °C for about 4 hours, dissolving the powder in the solvent, after which the insoluble residue was removed by filtration, and the solution was added to 1 liter of methanol, which was

filtered again, giving purified poly(3-hexylthiophene).

This compound was added to chloroform of spectral-analysis grade at the proportions of 2 mg/ml, and was cast on a slide glass, giving a sample for spectral analysis in the ultraviolet and visible regions. Separately, a solution at the concentration of 50 mg/ml was prepared and cast on a slide glass, producing a film about 10 µm thick when it was dried and removed from the slide glass. The film was put into acetonitrile and doped with iodine, giving a sample for the measurement of conductivity.

As a comparative example, samples were prepared in the same way at room temperature (25° C), and the ultraviolet-visible spectrum and the conductivity were investigated.

The results of the measurements are in Table 3.

Table 3

| Relationship of positions of peaks in absorption spectra, conductivity, and preparation temperature | | |
|---|---|---|
| Preparation temperature (° C) | Absorption peak (nm) | Conductivity (S/cm) |
| 0 | 510 | 100 |
| 15 | 505 | 80 |
| 25 (Comparative Example) | 500 | 50 |

These results show that compared to the comparative example, the samples of this invention prepared at temperatures of 15° C or less gave a shift of the position of the peak of absorption to a region of longer wavelength and an increase in the conductivity. These results show that the polymer obtained had a high degree of polymerization.

It is understood that various other modifications will be apparent to and can be readily made by those skilled in the art without departing from the scope and spirit of this invention. Accordingly, it is not intended that the scope of the claims appended hereto be limited to the description as set forth herein, but rather that the claims be construed as encompassing all the features of patentable novelty that reside in the present invention, including all features that would be treated as equivalents thereof by those skilled in the art to which this invention pertains.

## Claims

1. A method of producing 5-membered polyheterocycles which comprises the dehydrogenation condensation of a 5-membered heterocyclic compound in the presence of an oxidizing agent wherein at least one of the following conditions is fulfilled:
   (a) the reaction system is dehydrated;
   (b) the reaction system is deoxygenated; and
   (c) the reaction temperature is 15° C or less.

2. A method according to claim 1, wherein said oxidizing agent is a metal halide.

3. A method according to claim 1 or 2 wherein all three conditions, (a), (b) and (c), are fulfilled.

4. A method according to claim 1, 2 or 3 wherein the 5-membered heterocyclic compound is 3-hexylthiophene.

6945

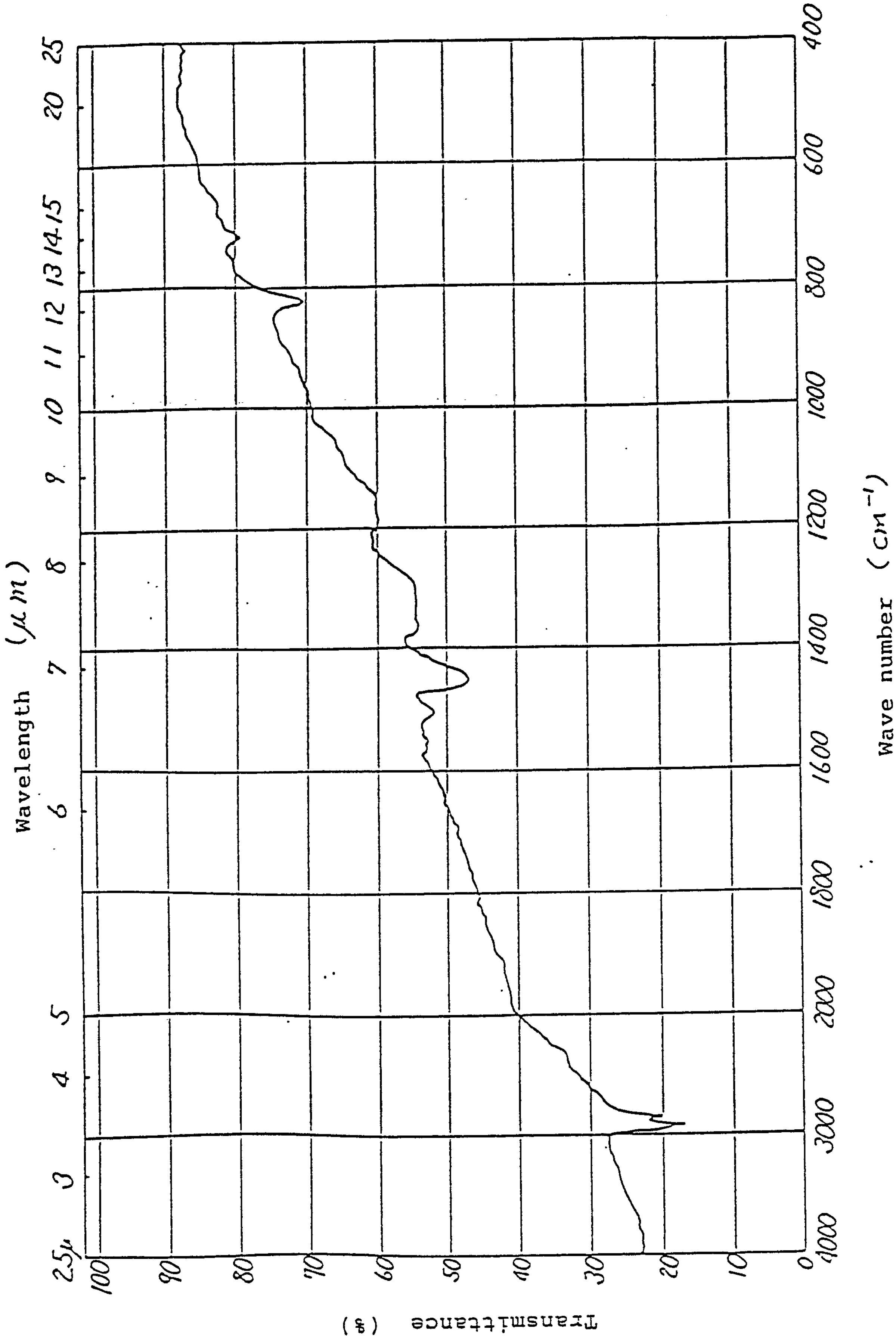

Wavelength (μm)
2.5μ
3
4
5
6
7
8
9
10
11
12
13
14
15
20
25
Wave number (cm⁻¹)
4000
3000
2000
1800
1600
1400
1200
1000
800
600
400
Transmittance (%)
100
90
80
70
60
50
40
30
20
10
0


Fig. 1

European Patent Office

# EUROPEAN SEARCH REPORT

Application Number

EP 89 30 2511

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 097 893 (BAYER AG) * claim 1, page 2, line 5; page 3, lines 21-29; pages 6-8, examples 1-6 * | 1,3 | C 08 G 61/12<br>H 01 B 1/12 |
| X,D | CHEMISTRY EXPRESS vol. 1, no. 11, 1986,pages 635-638, Kinki Chemical Society, Japan; R. SUGIMOTO et al.: "Preparation of Soluble Polythiophene Derivatives Utilizing Transition Metal Halides as Catalysts and Their Property" * page 635, line 33 - page 636, line 2 * | 1,2,4 | |
| A | JOURNAL OF POLYMER SCIENCE P. CHEM. ED. vol. 17, no. 7, July 1979, pages 1963-1976; P. KOVACIC et al.: "Polymerization of Aromatic Nuclei. XIX. Polymerization of Thiophene by Aluminum Chloride" * page 1964, last paragraph * | 1,2 | |
| A | POLYMER BULLETIN vol. 6, no. 5/6, January 1982, pages 315-320, Heidelberg, Deutschland; S. HUEHOLT et al.: "Polymerisation of Different Furanes with Cr(II) Surface Compounds on Silicagel" * page 315, last paragraph * | 1 | TECHNICAL FIELDS SEARCHED (Int. Cl.4)<br>C 08 G<br>H 01 B |

The present search report has been drawn up for all claims

| Place of search | Date of completion of the search | Examiner |
|---|---|---|
| BERLIN | 15-06-1989 | VOIGTLAENDER R O J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document